Europäisches Patentamt

European Patent Office

Office européen des brevets

(11) Publication number: **0 088 759**
**B1**

(12) **EUROPEAN PATENT SPECIFICATION**

(45) Date of publication of patent specification: **06.08.86**

(21) Application number: **82900835.8**

(22) Date of filing: **12.03.82**

(86) International application number:
**PCT/SE82/00066**

(87) International publication number:
**WO 82/03674 28.10.82 Gazette 82/26**

(51) Int. Cl.⁴: **F 16 L 37/28, F 16 L 29/00**

(54) **OUTLET MEANS FOR A CONTAINER.**

(30) Priority: **23.04.81 SE 8102598**

(43) Date of publication of application:
**21.09.83 Bulletin 83/38**

(45) Publication of the grant of the patent:
**06.08.86 Bulletin 86/32**

(84) Designated Contracting States:
**AT BE CH DE FR GB LI LU NL SE**

(56) References cited:
**DE-A-1 806 516**
**US-A-2 485 006**
**US-A-3 520 331**
**US-A-3 994 317**

(73) Proprietor: **KenoGard AB**
**Box 11033**
**S-100 61 Stockholm (SE)**

(72) Inventor: **NORSTEDT, Göran**
**Platverksgatan 163**
**S-724 74 Västeras (SE)**

(74) Representative: **Schöld, Zaid**
**c/o KemaNobel AB Patents Box 11065**
**S-100 61 Stockholm (SE)**

Courier Press, Leamington Spa, England.

# Description

## Technical Field

The present invention relates to an outlet means for a container. More particularly the invention relates to such means for containers containing pesticides.

## Background of the Invention

In fields wherein it, for varying reasons, is important to avoid spillage from containers or contamination of containers it is necessary to take special measures to obtain emptying and filling processes which are as closed as possible. The handling of containers for pesticides is an example of such a field.

Pesticides are generally delivered in drums which, when used, are connected to sprayers and the like by opening a cover on the drum and inserting a suction pipe into the drum. Even if the pipe is sealed to the opening of the drum a considerable spillage cannot be avoided at this type of handling. When the outlet pipe is removed from the drum there will be lots of the pesticidal agent left on the pipe, both on the inside and the outside, and, further, the dismounting and later mounting of the cover will bring about risks of spillage. Since the pesticidal agent in the drum is in a much more concentrated form than the eventually used diluted liquid also minor spillages can be health-endangering and a drum fouled by pesticides is a problem with respect to handling and destruction. A further problem in this connection is that the connecting of the drum to the distributor means, according to what has been said above, gives rise to several occasions when the inside and the contents of the drum can be contaminated with impurities from the environment. It is generally too expensive to carry out cleaning under conditions which are acceptable with respect to occupational hygiene and used drums are thus as a rule collected and destroyed, which, however, also must be done under controlled conditions. There is a special problem when special coupling means are attached to the drums as the concentrated pesticidal agents are comparatively viscous and can dry and form deposits which might clog openings or prevent mechanical parts from functioning as they should.

## General Description of the Invention

The main object of the present invention is to provide a system for emptying containers which system is not impaired by the above described disadvantages. A particular object of the invention is to provide a system which reduces the risks of spillage and fouling. A further object is to provide an emptying system which is closed to such an extent that re-use of used drums is made possible. A further object of the invention is to provide an emptying system particularly suitable to be used for containers containing pesticides.

These objects are achieved in the manner evident from the appended claims.

According to the invention a container is provided with a coupling part having a valve which is open only when a pipe is attached to the coupling part in a sealed manner and this gives several advantages. The risk of spillage of the container contents is considerably reduced since there is no opening between the interior of the container and the environment unless the intended connection is in place. There are no longer any requirements for dismounting, remounting and storage of a cover. The risk of impurities entering the container is also reduced and this eliminates the requirement for cleaning at re-use. The risk of mistakes at connecting the container to the intended distributor means is considerably reduced. The connecting part is also provided with a coupling part having a valve, which is open only when the part is attached to the container in the intended manner, so the risk of spillage from e.g. a conduit is eliminated and so is the requirement for emptying this when changing the container. The risk of fouling the outside of the container with its content is exceedingly small with this arrangement, which facilitates a safe re-use of the container. By designing the coupling parts to be spillage-proof another advantage, besides further reduction of the risk of spillage, is gained, namely that the risk of faulty functioning of the mechanical parts of the coupling, owing to presence of container contents in the coupling, is reduced and also that the risk of impurities entering the drum or the coupling is reduced since spillage-proof couplings hardly can be connected when impurities in amounts worth mentioning are present. The system is closed both at emptying and at re-filling. It is particularly advantageous to design the coupling parts as quick-couplings as this considerably facilitates the coupling both at emptying and filling. The above mentioned advantages are particularly important with respect to containers containing pesticides. The noxious content means that also minor spillages must be avoided. The reduced risk of contamination makes re-use of the containers possible which it, for economical reasons, has not been previously. The safety of spillage-proof coupling against contamination, according to what has been said above, is a particular advantage here as pesticides can dry and form troublesome deposits.

## Detailed Description of the Invention

The invention is applicable whenever containers shall be coupled to exterior connections and it is desired that the handling of the contents of the containers is as closed as possible. The invention is particularly applicable for containers containing noxious substances, e.g. different pesticides, and particularly plant protection chemicals.

To avoid direct contact between the interior of the container and the environment a coupling is used which consists of a first coupling part, intended to be attached to an opening in the container in a sealed manner, and a second coupling part intended to be attached to the external connector means in a sealed manner. The parts are suitably designed as quick-couplings which easily can be coupled and separated from each other by a simple hand-grip but there is nothing to prevent the coupling parts from being designed in another manner, for example with threads. Each coupling part should be provided with a valve so that the inlets to the container and the attached conduit respectively can be closed when the coupling parts are separated and be opened when the parts are coupled to each other. The valves are suitably positioned as close to the point of separation of the coupling as possible. The valves are preferably automatic so that they will be open only when the coupling parts are coupled and closed when they are not.

The used coupling should be spillage-proof to minimise the amount of exposed liquid when the coupling is separated. The requirement for spillage-proofness means that the parts of the coupling and the valves shall be designed in such a manner that essentially no volume of the connecting canal through the coupling are exposed between the valves when the parts of the coupling are separated from each other. This means that also the fitting of the different parts of the coupling is satisfactory and impurities hardly can be present between the valves in the coupling without preventing the function when connection is attempted. Spillage-proof couplings are known per se, e.g. through US—A—3 520 331 and US—A—3 994 317.

If the container shall be emptied with the coupling on the container directed upwards, it is suitable to arrange a discharge pipe in the container which extends from the coupling to the bottom of the container and this pipe ought to be permanently fitted in the container. This manner of use is preferred since it minimises the risk of spillage and fouling.

To facilitate the entry of air at emptying the container and release of air at filling, respectively, an air opening should be arranged. The air opening should be designed in such a manner that it does not easily release the container contents or allow impurities to enter. The air opening is suitably also provided with a valve and preferably with an automatic valve, as above, which is open only when the parts of the coupling are engaged. According to the invention two spillage-proof couplings, as described, are arranged on the container and one of them can function as an air opening via a suitably arranged connecting means to this, while the other coupling functions as an emptying opening according to what has. been described earlier. This arrangement gives increased possibilities of use and permits e.g. pumping of the container contents. If two couplings are used in this manner suitably only one of them is provided with an emptying pipe, as above, if both are placed on the same side of the container, since one coupling hereby always can function as outlet and the other as inlet, for either air or liquid, independent of the position of the container.

It is preferred to fit the coupling to a cover or some other detachable part of the container. This considerably facilitates change and servicing of the coupling at the same time as it makes the invention applicable in a simple manner for standard containers of different kinds.

It is further preferred that the coupling part or parts arranged on the container are given a safe position by being arranged recessed relative to surrounding parts. If the coupling is mounted on a cover, according to what has been said above, it can be in a recessed position relative to the peripherical border of the cover. It is particularly suitable to arrange the coupling in a recessed position relative to the upper surface of the container or at least relative to an optional edge surrounding this surface as the container then can be handled and piled entirely without risk of damaging the coupling.

Accompanying Drawings

Figure 1 is a section through a container provided with two openings bearing couplings according to the invention.

Figure 2 shows, partly in section and partly in view, a preferred embodiment of both parts of a spillage-proof coupling suitable for use according to the invention.

Description of Drawings

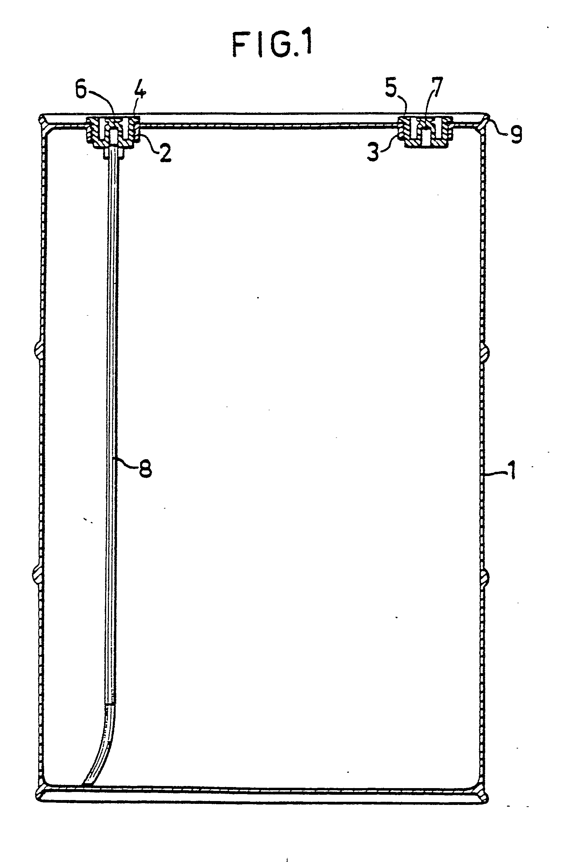

Figure 1 shows a container 1 provided with two threaded openings 2 and 3. Parts 4 and 5 are screwed into the openings and are provided with first coupling parts 6 and 7, which connect the interior of the container with the environment. The coupling part 6 is provided with an emptying pipe 8 which extends from the coupling down to the bottom of the container. It is evident from the figure that the coupling parts 6 and 7 are recessed both relative to the upper periphery of the cover and relative to the upper edge of the container 9.

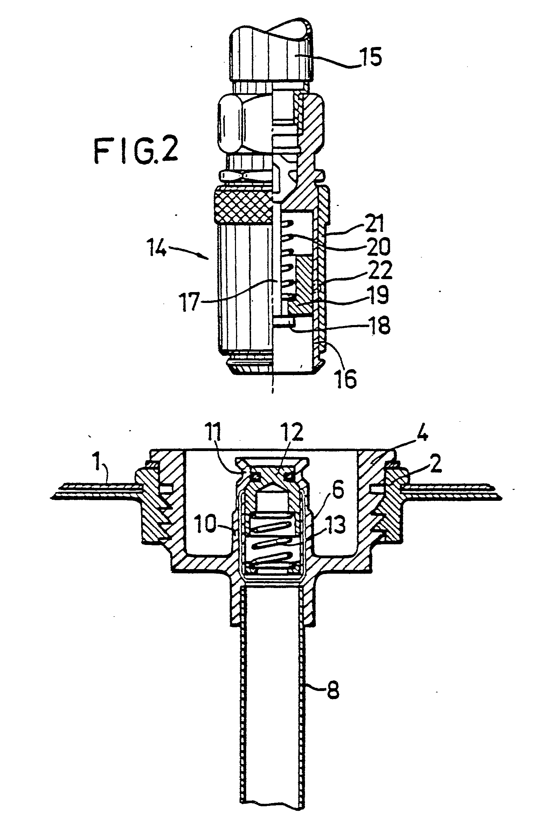

Figure 2 shows on a larger scale the threaded opening 2 of the container 1, the cover 4 which is screwed in, the coupling part 6 and the emptying pipe 8. Further is shown that the coupling part 6 comprises a substantially cylindrical part 10 which defines a channel having a more narrow part 11 against which tapered part a valve body 12 normally is pressed on in a sealing manner by means of the spring 13. If the valve body 12 is pressed down and away from the tapered part 11 of the channel there will be a connection between the interior of the container and the environment. Figure 2 also shows the second coupling part, designated generally by 14, which is intended to be attached to the first coupling part 6 in a sealed manner and to connect the interior of the container and an external connection conduit 15. The second coupling part comprises a sleeve 16, intended to be passed over the essentially cylindrical part 10 of the first coupling part. The second coupling part further comprises a central part 17 which has an end part 18 the size of which is adjusted with respect to the surface of the valve body 12. The channel space between the central part 17 and the sleeve 16 is normally sealed by a cylindrical valve body 19 which is pressed against the end part 18 by means of the spring 20. If the cylindrical valve body 19 is pressed upwards and away from the end part 18 a connection between the opening of the second coupling part and the connection conduit 15 will be exposed. When the first and the second coupling parts are engaged by passing the sleeve 16 over the cylindrical part 10, the end part 18 on the central part 17 will press the valve body 12 on the first coupling part downwards to an open position and the upper part of the essentially cylindrical part 10 will at the same time press the cylindrical valve body 19 on the second coupling part upwards to an open position and a continuous channel will be formed through .the coupling parts from the interior of the container to the external connection conduit. In an engaged position the coupling parts can be mutually locked by means of a quick-coupling mechanism comprising balls 22 which are pressed into the recess at the tapered part 11 of the cylindrical part 10 by means of a displacement of the jacket 21.

·The described coupling is spillage-proof since the only volume of the entire connecting channel which is exposed when the coupling parts are separated from each other is the space present between the upper surface of the valve body 12 on the first coupling part and the lower surface on the end part 18 on the second coupling part.

## Claims

1. Container (1) for hazardous liquids with a spillage-proof coupling (6, 14) of the type designed to be engaged in a sealing manner forming a connecting channel through the coupling parts, with valves (12, 19) arranged in the coupling parts, which valves are closed when the coupling parts are separated from each other and open when the coupling parts are engaged, wherein the coupling parts and the valves are designed in such a manner that no volume of the connecting channel is exposed between the valves when the coupling parts are separated, characterized in that the upper surface of the container is optionally surrounded by a raised rim (9) portion, and is provided with liquid outlet and air inlet openings one of which openings being provided with an emptying pipe (8) extending from the opening to the bottom of ͺthe container and that spillage-proof coupling ̓parts (6, 7) are arranged in both the liquid outlet and the air inlet openings so as to be recessed · below the upper surface of the container or below its surrounding rim (9).

2. Container according to claim 1, characterized in that a first coupling part (6, 7) is mounted on a detachable cover (2, 3) on the container (1).

3. Container according to claim 1, characterized in that the coupling parts are designed as a quick-coupling.

4. Container according to any of the preceding claims, characterized in, that it contains pesticides.

## Revendications

1. Récipient (1) pour liquides dangereux comportant un couplage anti-fuite (6, 14) du type conçu pour venir en prise de manière étanche, en formant un canal de liaison par l'intermédiaire des parties de couplage, avec des soupapes (12, 19) disposées sur les parties de couplage, ces soupapes étant fermées lorsque les parties de couplage sont séparées l'une de l'autre et ouvertes lorsque ces parties sont en prise, les parties de couplage et les soupapes étant conçues de manière qu'aucun volume du canal de liaison soit exposé entre les soupapes lorsque les parties de couplage sont séparées, caractérisé en ce que la surface supérieure du récipient est au choix, entourée par une bordure surélevée (9) et elle est munie d'orifices pour l'évacuation du liquide et pour l'admission de l'air, l'un de ces orifices étant muni d'une conduite de vidange (8), qui s'étend depuis l'orifice jusqu'au fond du récipient et en ce que les parties de couplage anti-fuite (6, 7) sont disposées à la fois dans les orifices d'évacuation du liquide et dans les orifices d'admission d'air de manière à être encastrées en-dessous de la surface supérieure du récipient ou sur sa bordure (9) qui l'entoure.

2. Récipient selon la revendication 1, caractérisé en ce qu'une première partie de couplage (6, 7) est montée sur un couvercle détachable (2, 3) sur le récipient (1).

3. Récipient selon la revendication 1, caractérisé en ce que les parties de couplage sont conçues sous la forme d'un couplage rapide.

4. Récipient selon l'une quelconque des revendications précédentes, caractérisé en ce qu'il contient des pesticides.

## Patentansprüche

1. Behälter (1) für gefährliche Flüssigkeiten mit einer auslaufsicheren Kupplung (6, 14) eines Typs, der so ausgebildet ist, daß er in dichter Weise in Eingriff gebracht werden kann, so daß ein Verbindungskanal durch die Kupplungsteile gebildet wird, mit Ventilen (12, 19), die in den Kupplungsteilen angeordnet sind, welche Ventile geschlossen sind, wenn die Kupplungsteile voneinander getrennt sind, und offen sind, wenn die Kupplungsteile miteinander in Eingriff stehen, wobei die Kupplungsteile und die Ventile so ausgebildet sind, daß kein Volumen des Verbindungskanals zwischen den Ventilen freiliegt, wenn die Kupplungsteile getrennt werden, dadurch gekennzeichnet,

daß die obere Außenfläche des Behälters wahlweise von einem vorstehenden Randabschnitt (9) umgeben ist, und mit Flüssigkeitsauslaß- und Lufteinlaßöffnungen versehen ist, von denen eine mit einem Entleerungsrohr (8) versehen ist, das von der Öffnung zum Boden des Behälters verläuft, und daß die auslaufsicheren Kupplungsteile (6, 7) sowohl in der Flüssigkeitsauslaß- als auch der Lufteinlaßöffnung derart angeordnet sind, so daß sie unter die obere Außenfläche des Behälters oder unter seinen umgebenden Rand (9) vertieft sind.

2. Behälter nach Anspruch 1, dadurch gekennzeichnet,

daß der erste Kupplungsteil (6, 7) an einem abnehmbaren Deckel (2, 3) am Behälter (1) angebracht ist.

3. Behälter nach Anspruch 1, dadurch gekennzeichnet,

daß die Kupplungsteile als Schnellkupplung ausgebildet sind.

4. Behälter nach einem der vorhergehenden Ansprüche, dadurch gekennzeichnet,

daß er Pestizide enthält.

# FIG.1

FIG.2